# EUROPEAN PATENT APPLICATION

(11) **EP 1 092 753 A1**
(43) Date of publication of application: **18.04.2001**
(21) Application number: 00921039.4
(22) Date of filing: 26.04.2000
(51) Int. Cl.: C09B 23/08, C09B 23/12, B41M 5/26, G11B 7/24

(54) **CYANINE DYE**

(30) Priority: 27.04.1999 JP 11914299; 09.02.2000 JP 2000031773
(71) Applicant: Kabushiki Kaisha Hayashibara Seibutsu Kagaku Kenkyujo, Okayama-shi, Okayama 700-0907 (JP)
(72) Inventor: HOHSAKA, Ayako, Okayama-shi, Okayama 703-8232 (JP); KAWATA, Toshio, Okayama-shi, Okayama 700-0941 (JP); YASUI, Shigeo, Okayama-shi, Okayama 702-8044 (JP)
(74) Representative: Daniels, Jeffrey Nicholas
(86) International application number: JP0002740
(87) International publication number: WO0064989

(57) **Abstract**

The present invention provides organic dye compounds which have a fluorine-containing anion as a counter ion, satisfactory solubility, and advantageous usefulness in optical recording media. The object of the present invention is solved by providing indolenine pentamethine cyanine dyes having a specific structure, light absorbents, and optical recording media which all comprise the cyanine dyes; and a process for producing the cyanine dyes which comprises a step of reacting a compound, having a 3,3-dimethyl-2-(1,3-butadienyl)-3H-benzoindolenium skeleton, with a compound having a 2,3,3-trimethyl-3H-benzoindolenium skeleton.

## Description

### TECHNICAL FIELD

The present invention relates to cyanine dyes which are useful as light absorbents, and more particularly, to novel indolenine pentamethine cyanine dyes which are useful in optical recording media.

### BACKGROUND ART

As coming into this multi-media age, optical recording media such as compact disc recordable (CD-R, a write-once memory using compact disc); and digital versatile disc (DVD-R, a write-once memory using digital video disc) have been highlighted. Optical recording media can be classified roughly into those of inorganic ablation type which have recording layers composed of inorganic substances such as tellurium, selenium, rhodium, carbon, or hydrogen sulfide; and those of organic ablation type which have recording layers composed of light absorbents composed of organic dye compounds mainly.

Among these, optical recording media of organic ablation type are usually prepared by dissolving a cyanine dye in an organic solvent such as 2,2,3,3-tetrafluoro-1-propanol (abbreviated as "TFP" hereinafter), coating the solution on the surface of a polycarbonate substrate, drying the coated solution to form a recording layer, forming on the surface of the recording layer both a reflection layer made of a metal such as gold, silver or copper and a protection layer made of an ultraviolet ray hardening resin, and sequentially attaching the above layers on the surface of the recording layer. As compared with inorganic ablation type optical recording media, those of organic ablation type have the drawback that their recording layers may be easily changed by environmental lights such as reading- and natural-lights, while organic ablation type optical recording media have the merit that they can be manufactured at a lesser cost because their recording layers can be formed by preparing solutions of light absorbents and directly coating them on the surface of substrates. In addition, organic ablation type optical recording media have now predominantly become low-cost optical recording media because they are mainly composed of organic substances so that, as the advantage, they are substantially free of corrosion even when contacted with moisture or sea water and because information which is stored in the optical recording media can be read by using compact disc players by the establishment of thermal deformation type optical recording media as a kind of organic ablation type optical recording medium.

As disclosed, for example, by Masahiro Shinkai in "Senryo-to-Yakuhin" (Dyes and Chemicals), Vol. 41, No. 5, pp. 124-134 (1996), what is the urgently required object in organic ablation type optical recording media is to explore a cyanine dye, which satisfactorily dissolves in organic solvents, in order to effectively produce high-end, high-quality optical recording media in a relatively-high yield. It is recognized that pentamethine cyanine dyes, which have five methine groups as coupling groups that form carbocyanine, are preferable as cyanine dyes for the present standard CD-Rs with respect to laser beams used for writing information. Because conventional cyanine dyes having perchloric acid ion as a counter ion are susceptible to explosion and difficult to handle and because among noble metals highly-reactive silver is now being used, recently required are thermo-stable, safe cyanine dyes which have fluorine-containing anions such as hexafluoro phosphoric acid ion as a counter ion. However, the pentamethine cyanine dyes having a fluorine-containing anion as a counter ion, which include, for example, those proposed in Japanese Patent No. 2,594,443 and Japanese Patent Kokai No. 97,586/91, do not have a sufficient solubility in organic solvents which are frequently used in producing optical recording media, particularly, those which have a relatively-high evaporation velocity, and this results in difficulties of improving the working efficiency when forming recording layers over substrates for optical recording media by dissolving the pentamethine cyanine dyes in the above solvents and coating the resulting solutions over the substrates in a rotatory manner, and of producing high-end, high-quality optical recording media in a relatively-high yield.

### OBJECT OF THE INVENTION

In view of the foregoing, the object of the present invention is to provide organic dye compounds having a fluorine-containing anion as a counter ion and superior solubility, which are advantageously used in optical recording media such as CD-Rs.

To attain the above object, the present inventors eagerly studied and screened various compounds. As a result, they found that specific indolenine pentamethine cyanine dyes having a fluorine-containing anion as a counter ion, which are obtainable through a step of reacting a compound having a 3,3-dimethyl-2-(1,3-butadienyl)-3H-benzoindolenium skeleton with a compound having a 2,3,3-trimethyl-3H-benzoindolenium skeleton, have various applicability in the fields where visible light-absorbing organic compounds are required. It was found that, among these cyanine dyes, those which substantially absorb laser beams with wavelengths of around 780 nm when in a thin layer form and which have relatively-high solubility in organic solvents such as TFP can be extremely useful as light absorbents for composing recording layers of optical recording media such as CD-Rs. The present invention was made based on the creation of these novel organic dye compounds and the discovery of their industrially-useful characteristics.

### Brief Explanation of the Accompanying Drawing

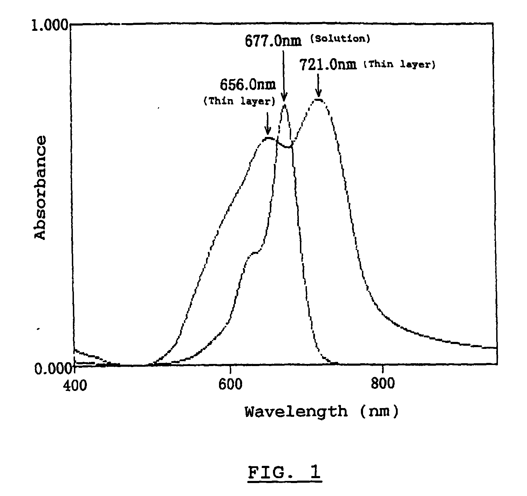

FIG. 1 shows visible absorption spectra of one of the cyanine dyes of the present invention.

### BEST MODE OF THE INVENTION

The present invention solves the above object by providing the indolenine pentamethine cyanine dyes represented by

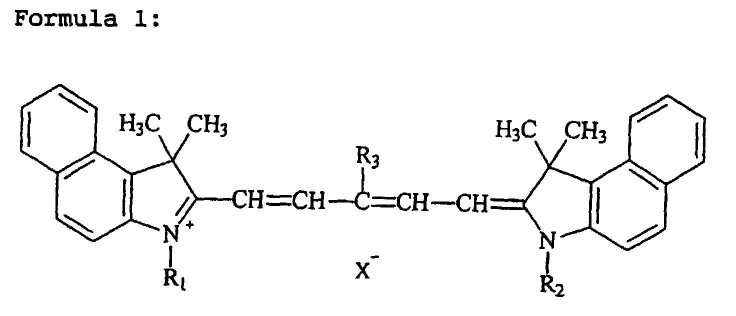

In Formula 1, R₁ denotes methyl or ethyl group, and R₂ differs from R₁ and denotes a straight- or branched-chain alkyl group. R₃ denotes hydrogen or a substituent selected from halogens and lower alkyl groups. X⁻ denotes an anion having fluorine or a metallic element of the 15 group in the periodic law table.

Explaining R₂ and R₃ In more detail, R₂ is generally a substituent having up to 12 carbon atoms such as methyl, ethyl, propyl, isopropyl, butyl, isobutyl, *sec*-butyl, *tert*-butyl, pentyl, isopentyl, neopentyl, *tert*-pentyl, 1-methylpentyl, 2-methylpentyl, hexyl, isohexyl, 5-methylhexyl, octyl, or dodecyl group, provided that R₂ is selected from alkyl group other than methyl group when R₁ is methyl group, while R₂ is selected from alkyl group other than ethyl group when R₁ is ethyl group. R₃ denotes hydrogen or a substituent selected from halogens such as fluoro, chloro, bromo and iodo; or a straight- or branched-chain lower alkyl group having up to 6 carbon atoms such as methyl, ethyl, propyl, or isopropyl group.

X⁻ is not specifically restricted to as long as it is an anion having fluorine or a metallic element of the 15 group in the periodic law table, and depending on uses, it can be appropriately selected with an index of their light absorbing property and solubility in organic solvents. When using in optical recording media, preferable ones are, for example, hexafluoro phosphoric acid ion and hexafluoro antimonic acid ion which contain fluorine or antimony and which do not substantially deteriorate reflection layers containing metals.

The cyanine dyes of the present invention can be prepared by different methods, however, advantageous ones are those which comprise a step of reacting a compound, having a 3,3-dimethyl-2-(1,3-butadienyl)-3H-benzoindolenium skeleton, with a compound having a 2,3,3-trimethyl-3H-benzoindolenium skeleton when their production cost is important. According to the method, the cyanine dyes of the present invention can be formed in a satisfactory yield by either reacting the compounds, represented by Formula 2 having R₁ and R₃ as defined in Formula 1, with the compounds represented by Formula 3 having R₂ as defined in Formula 1; or reacting the compounds, represented by Formula 4 having R₁ corresponding to Formula 1, with the compounds represented by Formula 5 having R₂ and R₃ as defined in Formula 1.

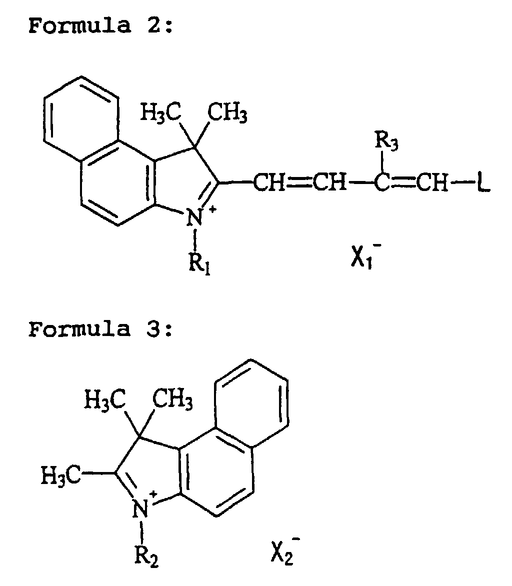

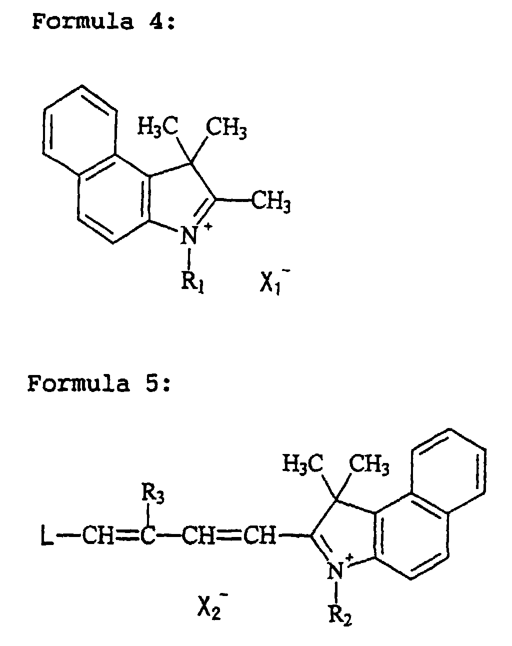

The compounds, represented by Formulae 2 and 3 or the compounds represented by Formulae 4 and 5, were respectively placed in a reaction container in adequate amounts, usually, in equimolar amounts, and the mixture is dissolved in a solvent such as acetic acid, acetic anhydride, propionic acid anhydride, methanol, ethanol, propanol, isopropanol, cresol, benzyl alcohol, methyl cellosolve, ethyl cellosolve, acetone, acetonitrile, 1,4-dioxane, tetrahydrofuran, tetrahydropyran, formamide, N-methylformamide, N,N-dimethyl formamide, N-methylpyrrolidone, dimethylsulfoxide, water, or mixtures thereof; and then, if necessary, after mixed with a basic compound such as potassium acetate, sodium acetate, potassium carbonate, calcium carbonate, triethylamine, N,N-dimethylaniline, piperidine, morpholine, pyridine, or 1,8-diazabicyclo[5.4.0]-7-undecene; and reacted for 0.5-5 hours under heating and stirring conditions. Thereafter, the resulting reaction mixture can be made directly or after subjected to conventional counter ion-exchange reaction into the cyanine dyes of the present invention having a specific fluorine-containing anion as a counter ion. With the method, the cyanine dyes represented by Chemical Formulae 1 to 12 can be prepared in a desired yield.

In Formulae R₂ to R₅, X₁⁻ and X₂⁻ represent the same or different counter ions as in Formula 1. Examples of such counter ions are inorganic ions such as hexafluoro phosphoric acid ion, halogen ion, phosphoric acid ion, perchloric acid ion, periodic acid ion, hexafluoro antimonic acid ion, hexafluoro stannic acid ion, fluoroboric acid ion, and hexafluoroboric acid ion; organic ions such as thiocyanic acid ion, benzenesulfonic acid ion, naphthalenesulfonic acid ion, p-toluenesulfonic acid ion, alkylsulfonic acid ion, benzenecarbonic acid ion, alkylcarbonic acid ion, trihaloalkylcarbonic acid ion, alkylsulfonic acid ion, trihaloalkylsulfonic acid ion, and nicotinic acid ion. When either or both X₁⁻ and X₂⁻ are not the prescribed fluorine-containing anions, these anions are allowed to be exchanged with the desired counter ions according to the aforesaid conventional method after completion of the reaction. Throughout Formulae 2 to 5, L denotes an appropriate leaving group, usually, a monovalent group of aniline or its derivative such as anilino, p-toluidino, p-methoxyanilino, p-ethoxycarbonylanilino, or N-acetylanilino group. For example, the compounds represented by Formulae 2 to 5 can be prepared by the method as disclosed in Japanese Patent Kokai No. 316,655/98 applied for by the same applicant as the present invention.

Concrete examples of the cyanine dyes of the present inventions include the compounds represented by Chemical Formulae 1 to 12, which all have absorption maxima in visible region and most of which substantially absorb laser beams with wavelengths of around 780 nm when in a thin-layer form. In addition, since these cyanine dyes have a relatively-high solubility, for example, in organic solvents such as TFP which is frequently used in preparing optical recording media, can be advantageously used as a material for composing recording-layers of optical recording media such as CD-Rs using laser beams with wavelengths of around 780 nm as a writing light.

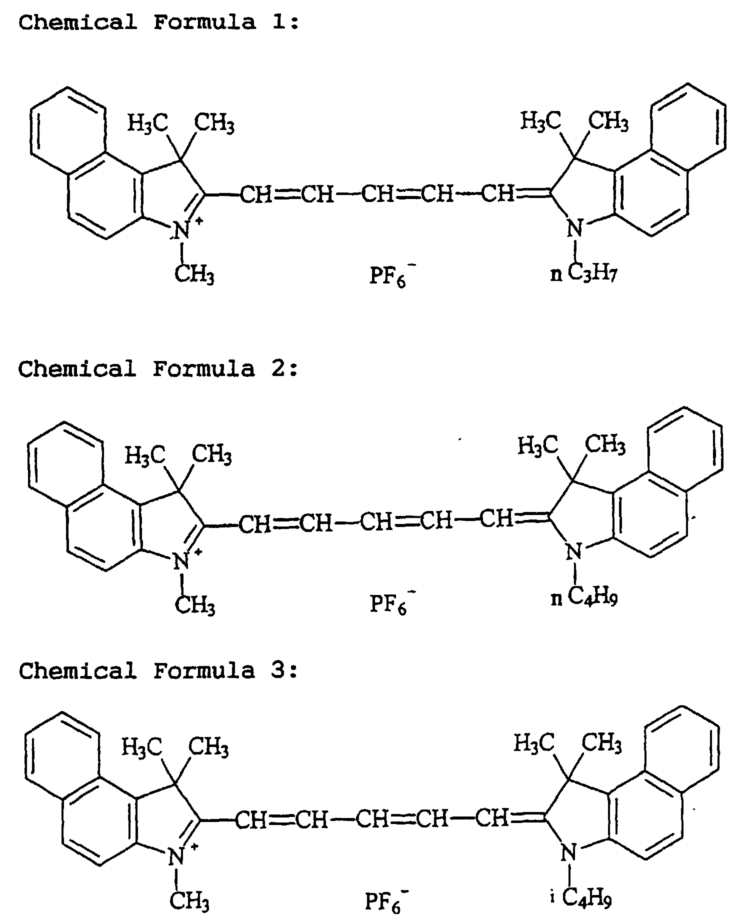

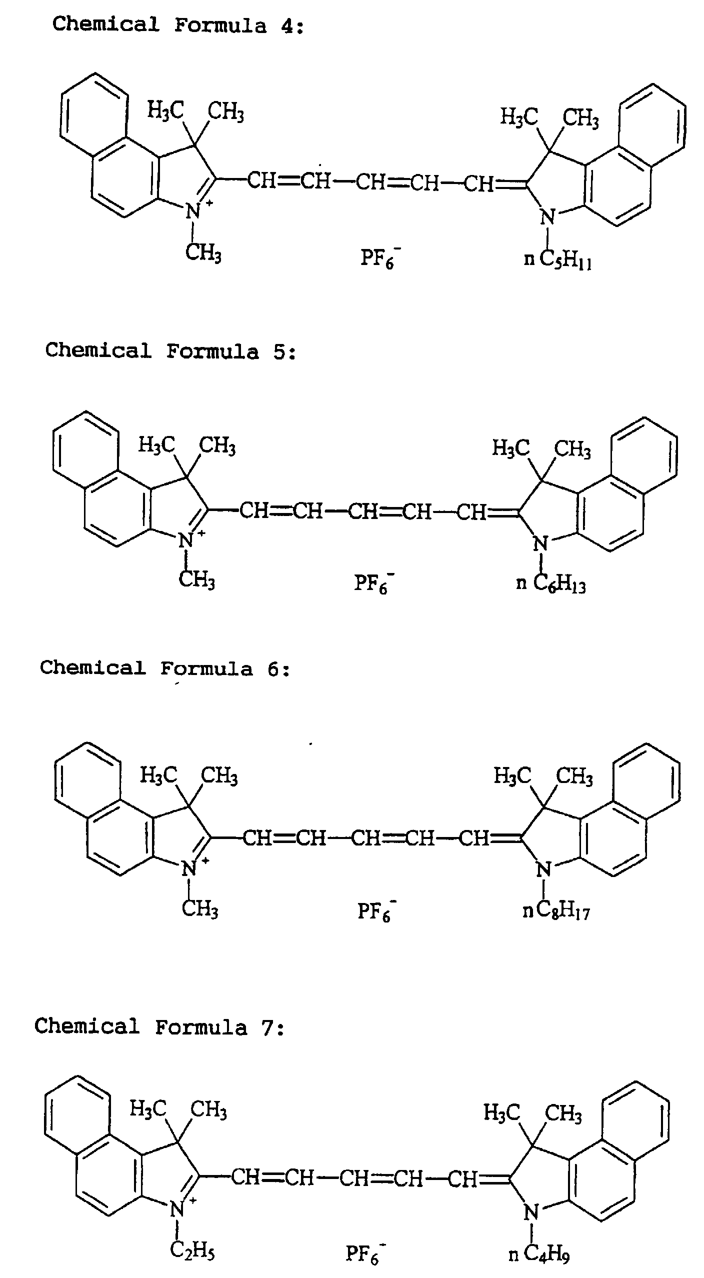

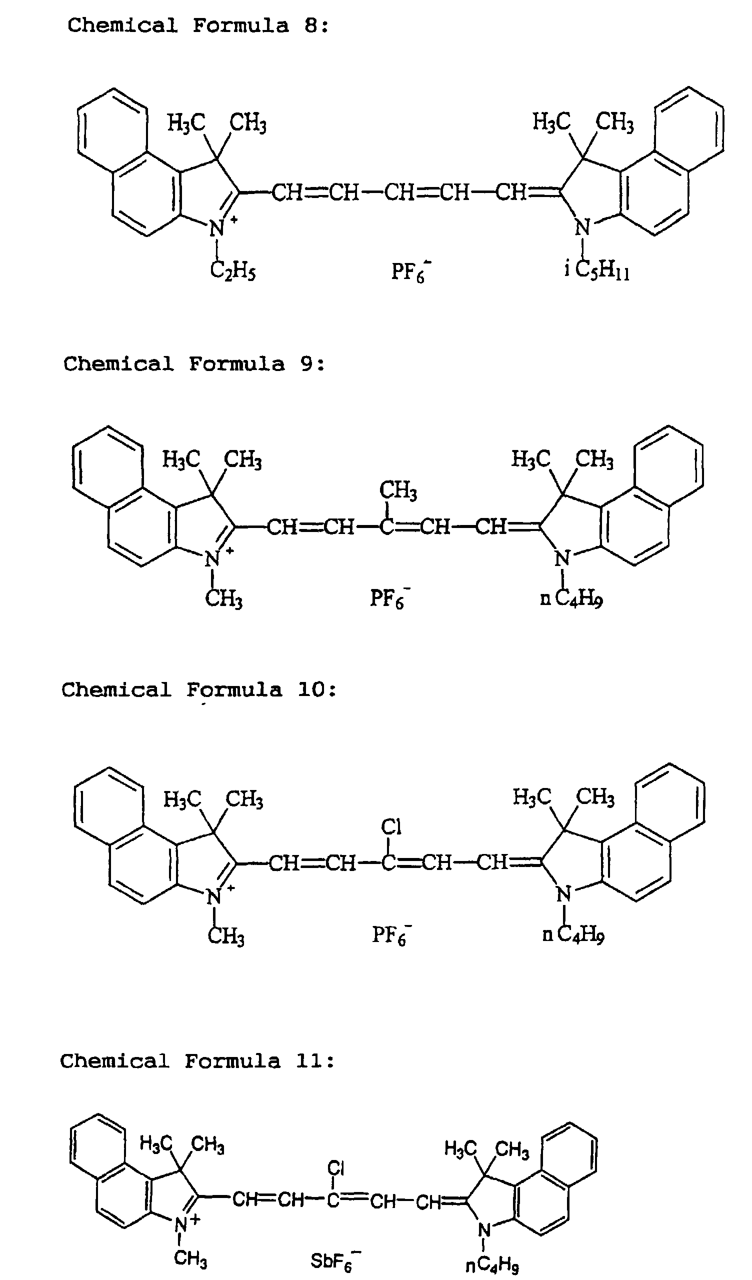

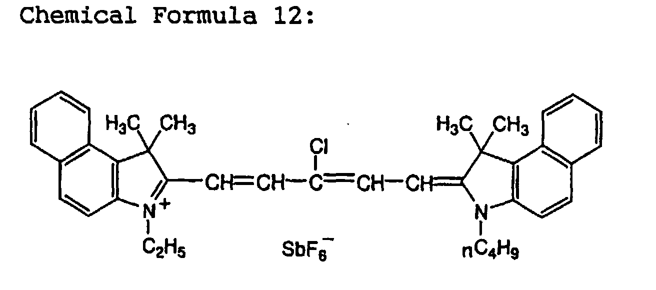

Depending on use, the resulting cyanine dyes of the present invention can be used intact in the form of a reaction mixture, however, prior to use they are usually purified by the methods widely used for purifying the related compounds such as dissolution, extraction, separation, decantation, sedimentation, filtration, concentration, thin-layer chromatography, column chromatography, gas chromatography, high-performance liquid chromatography, distillation, crystallization, and sublimation. If necessary, these methods can be used in combination. For use as light absorbents in optical recording media such as CD-Rs, the cyanine dyes of the present invention should preferably be purified by the methods such as distillation, crystallization, and/or sublimation prior to use.

The light absorbents of the present invention include those in general which comprise one or more of the cyanine dyes of the present invention and use their features of substantially absorbing visible light, independently of their components and physical forms. Therefore, the light absorbents of the present invention can be those which consist of the cyanine dye(s) represented by Formula 1 alone or in combination with one or more other components suitable for their uses. One of the fields, where the light absorbents of the present invention can be advantageously used, is of optical recording media. In this field, the light absorbents of the present invention can be preferably used as materials for composing optical recording layers in organic ablation type optical recording media, particularly, optical recording media such as CD-Rs which use laser beams with wavelengths of around 780 nm, usually, those with wavelengths of 775-795 nm. When used in optical recording media and as long as fulfil the present object, the light absorbents of the present invention can be processed with the cyanine dyes represented by Formula 1 and, if necessary, along with materials widely used in optical recording media such as light absorbents containing dye compounds other than the above cyanine dyes, light-tolerance improvers, binders, dispersants, fire retardants, lubricants, antistatic agents, surfactants, plasticizers, etc. As described above, since most of the cyanine dyes of the present invention have a relatively-high solubility in organic solvents, i.e., a solubility of over 12 mg/ml in TFP at 20°C, the light absorbents of the present invention, which comprise the cyanine dyes, facilitate their dissolving in organic solvents, improve the working efficiency for applying the mixture solutions to the substrates of optical recording media such as CD-Rs, and produce optical recording media with satisfactory feature and quality in a relatively-high yield.

Explaining the uses of the light absorbents of the present invention with reference to optical recording media, the optical recording media of the present invention can be prepared in accordance with the methods for conventional optical recording media because the light absorbents do not require any special treatment and handling when used in optical recording media. For example, to adjust the reflection factor and the light absorption factor in optical recording layers, the optical recording media of the present invention can be prepared by, if necessary, after incorporating into one or more of the cyanine dyes of the present invention as a light absorbent one or more other light absorbents and further one or more of light-tolerance improvers, binders, dispersants, fire retardants, lubricants, antistatic agents, surfactants, plasticizers, etc.; dissolving the cyanine dyes or the resulting mixtures in organic solvents; homogeneously coating the solutions on either surface of substrates by spraying, soaking, roller coating, rotatory coating methods, etc.; and drying the coated solutions on the substrates to form thin layers of cyanines as recording layers; and then if necessary, either forming reflection layers attached closely on the recording layers by vacuum deposition, chemical vapor deposition, sputtering, ion-planting methods, etc., to give a reflection factor of 65% or more, and preferably 75% or more, where the reflection layers are made of conventional materials for organic reflection layers or metals such as gold, silver, copper, platinum, aluminum, cobalt, tin, nickel, iron, and chromium; or forming protection layers attached closely on the reflection layers by rotatory coating on the reflection layers ultraviolet ray hardening resins or thermosetting resins which contain fire retardants, stabilizers, antistatic agents, etc., to protect the recording layers from scratches, dusts, stains, etc., and then hardening the coatings by heating or irradiating light.

The light-resistant improvers used in the present invention are, for example, nitroso compounds such as nitrosodiphenylamine, nitrosoaniline, nitrosophenol, and nitrosonaphthol; and metal complexes such as tetracyano quinodimethane compounds, diimmonium salts, "NKX-1199" (bis[2'-chloro-3-methoxy-4-(2-methoxyethoxy)dithiobenzyl]nickel) produced by Hayashibara Biochemical Laboratories, Inc., Okayama, Japan, and formazane metal complexes, which can be used in an appropriate combination, if necessary. Preferable light-resistant improvers are those which contain nitroso compounds or formazane metal complexes, and most preferable ones are nitroso compounds which have a phenylpyridylamine skeleton as disclosed in Japanese Patent Application No. 88,983/99, titled "Phenylpyridylamine derivatives" applied for by the same applicant as the present invention, and others which contain metal complexes comprising one or more formazane compounds as ligands and metals such as nickel, zinc, cobalt, iron, copper, palladium, etc. When used in combination with these light-resistant improvers, the cyanine dyes of the present invention can be effectively prevented from undesirable changes in deterioration, fading, color change, and quality change, which may be induced by the exposure of environmental lights such as reading- and natural-lights, without lowering the solubility of the cyanine dyes in organic solvents and substantially deteriorating their preferable optical characteristics. As a composition ratio, 0.01-5 moles, and preferably 0.1-1 mole of a light-resistant improver(s) can be incorporated into one mole of the present cyanine dye(s) while increasing and decreasing the ratio within the range.

The cyanine dyes of the present invention exert a totally-no-problematic solubility in various organic solvents on actual uses, and this does not substantially restrict organic solvents used for coating the cyanine dyes on substrates. Thus, in the preparation of optical recording media according to the present invention, for example, TFP frequently used to prepare optical recording media or the following organic solvents other than TFP can be selectively and appropriately used in combination, if necessary: Hydrocarbons such as hexane, cyclohexane, methylcyclohexane, dimethylcyclohexane, ethylcyclohexane, isopropylcyclohexane, *tert*-butylcyclohexane, octane, cyclooctane, benzene, toluene, and xylene; halogen compounds such as carbon tetrachloride, chloroform, 1,2-dichloroethane, 1,2-dibromoethane, trichloroethylene, tetrachloroethylene, chlorobenzene, bromobenzene, and α-dichlorobenzene; alcohols and phenols such as methanol, ethanol, 2,2,2-trifluoroethanol, 1-propanol, 2-propanol, 1-methoxy-2-propanol, 1-ethoxy-2-propanol, 1-butanol, 1-methoxy-2-butanol, 3-methoxy-1-butanol, 4-methoxy-1-butanol, isobutyl alcohol, pentyl alcohol, isopentyl alcohol, cyclohexanol, 2-methoxyethanol (methyl cellosolve), 2-ethoxy ethanol (ethyl cellosolve), 2-isopropoxy-1-ethanol, diethylene glycol, triethylene glycol, propylene glycol, glycerine, phenol, benzyl alcohol, cresol, and diacetone alcohol; ethers such as diethyl ether, diisopropyl ether, tetrahydrofuran, tetrahydropyran, 1,4-dioxane, anisole, 1,2-dimethoxyethane, diethylene glycol dimethyl ether, cyclohexyl-18-crown-6, methyl carbitol, and ethylcarbitol; ketones such as furfural, acetone, 1,3-diacetyl acetone, ethyl methyl ketone, and cyclohexanone; esthers such as ethyl acetate, butyl acetate, ethylene carbonate, propylene carbonate, and trimethyl phosphate; amides such as formamide, N-methyl formamide, N,N-dimethylformamide, and hexamethylphosphoric triamide; nitro compounds such as nitromethane and nitrobenzene; nitriles such as acetonitrile, and propionitrile; amines such as ethylenediamine, pyridine, piperidine, morpholine, and N-methylpyrrolidone; and sulfur-containing compounds such as dimethylsulfoxide and sulfolane.

Particularly, since the cyanine dyes of the present invention have a relatively-high solubility in easily-volatile organic solvents such as TFP, methyl cellosolve, ethyl cellosolve, and diacetone alcohol, they are substantially free from causing crystallization and inconsistency in thickness and surface of the formed recording layers when sequentially dissolved in the above organic solvents, coated on substrates, and dried. Most of the cyanine dyes of the present invention well dissolve in non-halogen solvents, for example, alcohols such as methyl cellosolve and ethyl cellosolve; and ketones such as diacetone alcohol and cyclohexanone. As the merit, the above alcohols do not substantially damage the substrates or spoil the environment when the present cyanine dyes are dissolved therein and coated on substrates.

The substrates used in the present invention can be commercially available ones, and usually they are prepared by forming appropriate materials, for example, into discs, 12 cm in diameter and 0.6-1.2 mm in thickness, to suite to final uses by the methods such as compression molding, injection molding, compression-injection molding, photopolymerization method (2P method), thermosetting integral method, and lightsetting integral method. Such discs can be used singularly or plurally after appropriately attaching them together with adhesives or adhesive sheets, etc. In principal, any materials for substrates can be used in the present invention as long as they are substantially transparent and have a transmittance of at least 80%, and preferably at least 90% in the range of wavelengths of 400 nm to 850 nm. Examples of such materials are glasses, ceramics, and others including plastics such as poly(methyl methacrylate), polycarbonate, polystyrene (styrene copolymer), polymethylpenten, polyetherimide, polysulfone, polyethersulfone, polyarylate, polycarbonate/polystyrene alloy, polyestercarbonate, polyphthalatecarbonate, polycarbonateacrylate, non-crystalline polyolefin, methacrylate copolymer, diallylcarbonatediethyleneglycol, and epoxy resin; among which polycarbonate is frequently used. In the case of plastic substrates, concaves for expression of synchronizing signals and addresses of tracks and sectors are usually transferred to the internal circle of the tracks during their formation. The concaves are not specifically restricted to a specific form, and preferably they are formed to give 0.3-1.2 µm in average wide and 70-200 nm in width.

Considering the viscosity, the light absorbents of the present invention are prepared into 0.5-5% (w/w) solutions in the above organic solvents, and then uniformly coated over the substrates to form a recording layer, having a thickness of 10-1,000 nm, and preferably 50-300 nm, after drying. Prior to the coating of the solutions, preliminary layers can be formed over the substrates to improve the protection and the adhesion ability of the substrates, if necessary. Materials of the preliminary layers are, for example, high-molecular substances such as ionomer resins, polyamide resins, vinyl resins, natural resins, silicons, and liquid rubbers. In the case of using binders, the following polymers can be used alone or in combination in a weight ratio of 0.01-10 times of the cyanine dye(s): Cellulose esters such as nitrocellulose, cellulose phosphate, cellulose sulfate, cellulose acetate, cellulose propionate, cellulose lactate, cellulose palmitate, and acetic propionic cellulose; cellulose ethers such as methyl cellulose, ethyl cellulose, propyl cellulose, and butyl cellulose; vinyl resins such as polystyrene, poly(vinyl chloride), poly(vinyl acetate), poly(vinyl acetal), poly(vinyl butyral), poly(vinyl formal), poly(vinyl alcohol), and poly(vinyl pyrrolidone); copolymer resins such as styrene-butadiene copolymers, styrene-acrylonitrile copolymers, styrene-butadiene-acrylonitrile copolymers, vinyl chloride-vinyl acetate copolymers, and maleic anhydride copolymers; acrylic resins such as poly(methyl methacrylate), poly(methyl acrylate), polyacrylate, polymethacrylate, polyacrylamide, and polyacrylonitrile; polyesters such as poly(ethylene terephthalate); and polyolefins such as chlorinated polyethylene, and polypropylene.

Explaining the use of the optical recording media according to the present invention, the optical recording media such as CD-Rs can write information at a relatively-high density by using a laser beam with an oscillation wavelength of 775-795 nm irradiated by semiconductor lasers such as those of AlGaInP, GaAsP, GaAlAs, InGaP, InGaAsP or InGaAlP; or YAG lasers combined with second harmonic generation inducing elements (SHG elements). Laser beams used to read information are those with wavelengths identical to or slightly longer than those for writing information, for example, those of 770-830 nm. As for the laser power for writing and reading information, in the optical recording media of the present invention, it is preferably set to a relatively-high level which exceeds the threshold of energy for forming pits when used for writing information, while it Is preferably set to a relatively-low level below the threshold when used for reading the recorded information, although the level of laser power varies depending on the type and ratio of light-resistant improvers used in combination with the cyanine dyes of the present invention: Generally, the level of laser power can be regulated to powers of at least 1 mW, and usually 3-30 mW for writing information; and to powers below 1 mW, and usually 0.1-0.5 mW for reading. The recorded information can be read by detecting the changes of the reflection light level or the transmission light level in the pits and the pit-less parts on the surface of optical recording media.

Since the optical recording media of the present invention can record information of characters, images, voices, and other digital data at a relatively-high density, they are extremely useful as recording media for professional and family use to record/keep these recorded information. Particular examples of the kinds of industries and the forms of information to which the optical recording media of the present invention can be applied are as follows: Drawings of constructions and engineering works, maps, ledgers of loads and rivers, aperture cards, architectural sketches, documents of disaster protection, wiring diagrams, arrangement plans, informations of news papers and magazines, local information, construction reports, blueprints of productions, etc., which are all for constructions and architectures; ingredient tables, prescriptions, product specifications, product price tables, part's lists, maintenance information, case study files of accidents and troubles, manuals for claims, production schemes, technical documents, sketches, details, company's house-made product files, technical reports, analysis reports, etc., which are all for manufacturing; customers' information on sales, customers' information, information of companies, contracts, informations of news papers and magazines, business reports, reports of companys' credibility, stock lists, etc., which are all for sales; companys' information, stock price records, statistical documents, informations of news papers and magazines, contracts, customers' lists, documents of application/notification/licenses/authorization, business reports, etc., which are all for financial; information of real property and transportations, sketches of constructions, maps, and local information, informations of news papers and magazines, lease contracts, companies' information, stock lists, traffic information, customers' lists, etc., which are all for real property and transportation; diagrams of writings and piping arrangements, documents of disaster protection, tables of operation manuals, documents of investigations, technical reports, etc., which are all for electric and gas supplies; medical cartes, files of clinical histories and case studies, diagrams for medical care/institution relationships, etc., which are all for medical services; texts, collections of questions, educational documents, statistical information, etc., which are all for private and preparatory schools; scientific papers, records in academic societies, monthly reports of researches, data of researches, records and indexes of documents and literatures, etc., which are all for universities, colleges, and research institutes; inspection data, literatures, patent publications, weather maps, analytical records of data, customers' files, judicial precedents on laws, etc., which are all for the field of information; membership lists, history notes, records of works/products, competition data, data of meetings/congresses, etc., which are all for organizations/associations; sightseeing information and traffic information, etc., which are all for sightseeing; indexes of homemade publications, information of news papers and magazines, who's who files, sport records, telop files, scripts for broadcastings, etc., which are all for mass communications and publishers; and others such as maps, ledgers of roads and livers, fingerprint files, resident cards, documents of application/notification/license/authorization, statistical documents, public documents, etc, which are all for government offices. Particularly, the write-once type optical recording media of the present invention can be advantageously used for storing records of cartes and official documents which must not be deleted or intentionally rewritten, and used as electric libraries of art galleries, libraries, museums, broadcasting stations, etc.

As a rather distinct use, the optical recording media of the present invention can be used to edit, revise, or prepare compact discs, digital video discs, laser discs, MD (a mini disc as information recording system using photomagnetic disc), CDV (a laser disc using compact disc), DAT (an information recording system using magnetic tape), CD-ROM (a read-only memory using compact disc), DVD-ROM (a read-only memory using digital video disc), DVD-RAM (a writable and readable memory using digital video disc), digital photos, movies, video softwares, computer graphics, publishing products, broadcasting programs, commercial messages, game softwares, etc.; and used as external program recording means for large-sized computers and car navigation systems.

Hereinbefore described are the preferable application examples of the cyanine dyes of the present invention to organic ablation type optical recording media which use laser beams with wavelengths around 780 nm as a writing light. However, when used in the field of high-density optical recording media such as DVD-Rs, as well as CD-Rs, the cyanine dyes of the present invention can be advantageously used for controlling and/or calibrating the optical absorption factor or optical reflection factor of the optical recording media by using in combination, for example, with one or more other organic dye compounds which substantially absorb laser beams with wavelengths of around 650 nm; or used for forming pits in the above optical recording media by transporting the excitation energy induced by the laser beams to the cyanine dyes via the organic dye compound(s) and then decomposing the cyanine dyes. The term "optical recording media" as referred to in the present invention means those in general which use the characteristics of substantially absorbing visible light inherent to the cyanine dyes of the present invention, and further includes, in addition to organic ablation type optical recording media, those prepared by the thermal coloration method which uses the chemical reaction of coloring agents and developers induced by the heat generated when the organic dye compounds absorb light; and includes those prepared by using the technique called "moth-eye type technique" which uses the phenomenon that the above heat smooths the pattern of periodical unevenness, provided on the surface of substrates.

In addition to the use of the aforesaid optical recording media, the light absorbents of the present invention can be advantageously used as materials for polymerizing polymerizable compounds by exposing to visible light, sensitizing solar batteries, and dying clothes because the cyanine dyes of the present invention have absorption maxima in visible region and substantially absorb visible light. If necessary, in combination with one or more other light absorbents capable of absorbing light in ultraviolet, visible and/or infrared regions, the light absorbents of the present invention can be used in clothes in general and others of building/bedding/decorating products such as drapes, laces, casements, prints, venetian blinds, roll screens, shutters, shop curtains, blankets, thick bedquilts including comforters, peripheral materials for thick bedquilts, covers for thick bedquilts, cottons for thick bedquilts, bed sheets, Japanese cushions, pillows, pillow covers, cushions, mats, carpets, sleeping bags, tents, interior finishes for cars, and window glasses including car window glasses; sanitary and health goods such as paper diapers, diaper covers, eyeglasses, monocles, and lorgnettes; internal base sheets/linings/materials for shoes; wrappers; materials for umbrellas; parasols; stuffed toys; lighting devices; filters/panels/screens for information displaying devices which use cathode-ray tubes, liquid crystal displays, electroluminescent displays, and plasma displays; sunglasses; sunroofs; sun visors; pet bottles; refrigerators; vinyl houses; lawns; optical fibers; prepaid cards; and peeping windows of ovens including electric ones. When used for wrapping, injecting, and enclosing the above products, the light absorbents of the present invention prevent living bodies and products from troubles and discomforts induced by environmental light such as natural and artificial lights or even lower these troubles and discomforts, and furthermore they can advantageously regulate the color, tint and appearance and adjust the light reflected from or passed through the products to a desired color balance.

The following examples describe the preferred embodiments according to the present invention:

### Example 1

### Cyanine dye

Forty milliliters of denatured alcohol were placed in a reaction vessel, admixed with 10.0 g of the compound represented by Chemical Formula 13, i.e., 1-ethyl-3,3-dimethyl-2-[4-(N-phenylacetoamide)-1,3-butadienyl]-3H-benzo[e]indolenium-hexafluorophosphate, and 10.2 g of the compound represented by Chemical Formula 14, i.e., 1-butyl-2,3,3-trimethyl-3H-benzo[e]indolenium=p-toluenesulfonate. Thereafter, the mixture was heated to 55°C and mixed with 4.6 ml of triethylamine drop by drop over 10 min under stirring conditions, and further reacted for 30 min at the same temperature under stirring conditions. After completion of the reaction, the reaction mixture was cooled with ice water, and the resulting crude crystal was collected by filtering, washed with denatured alcohol, dissolved by heating in an adequate amount of acetone/methanol (=2:1 by volume), filtered, concentrated, cooled, and refiltered to obtain 5.4 of a yellow-green crystal of the cyanine dye of the present invention represented by Chemical Formula 7.

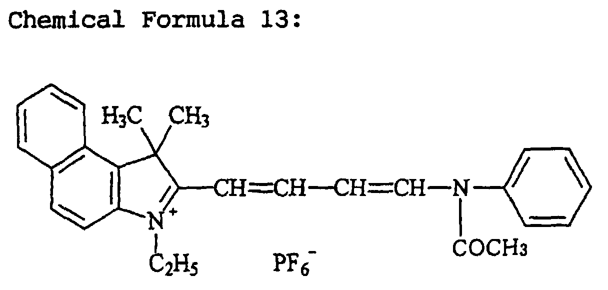

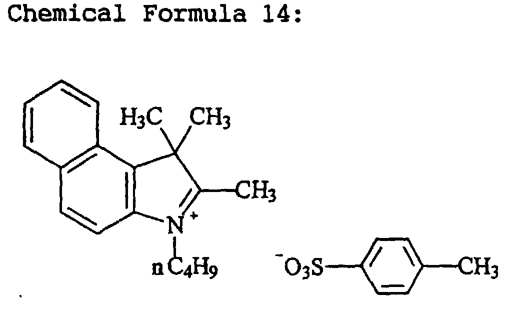

A portion of the crystal was placed in a container and measured for its melting point, revealing that it had a melting point of 244-246°C. Conventional measurement on ¹H-nuclear magnetic resonance spectrum in chloroform deuteride detected a chemical shift δ (ppm, TMS) of the crystal at peaks of 1.01 (3H, t, J=7.5 Hz, CH₃-), 1.44-1.53 (5H, m, CH₃CH₂-), 1.83 (2H, qw, J=7.5 Hz, -CH₂-), 2.02 (6H, s, CH₃-), 2.03 (6H, s, CH₃-), 4.09 (2H, t, J=7.5 Hz, -CH₂-), 4.17 (2H, q, J=7.5 Hz, -CH₂-), 6.14 (1H, d, J=14.1 Hz, -CH=), 6.18 (1H, d, J=14.1 Hz, -CH=), 6.63 (1H, t, J=12.6 Hz, -CH=), 732 (1H, d, J=8.1 Hz, ArH), 7.34 (1H, d, J=8.1 Hz, ArH), 7.45 (2H, t, J=7.5 Hz, ArH), 7.60 (2H, t, J=7.2 Hz, ArH), 7.91 (4H, d, J=7.8 Hz, ArH), and 8.11-8.19 (4H, m, ArH and - CH=).

### Example 2

### Cyanine dye

6.2 grams of a green-colored crystal of the cyanine dye represented by Chemical Formula 2 was obtained similarly as in Example 1 except for replacing the compound represented by Chemical Formulae 13 and 14 with 10.0 g of (1-butyl-3,3-dimethyl-2-[4-(N-phenylacetoamide)-1,3-butadienyl]-3H-benzo[e]indolenium=hexafluorophosphate, represented by Chemical Formula 15, and 8.78 g of (1,2,3,3-tetramethyl-3H-benzo[e]indolenium=p-toluenesulfonate, represented by Chemical Formula 16, respectively.

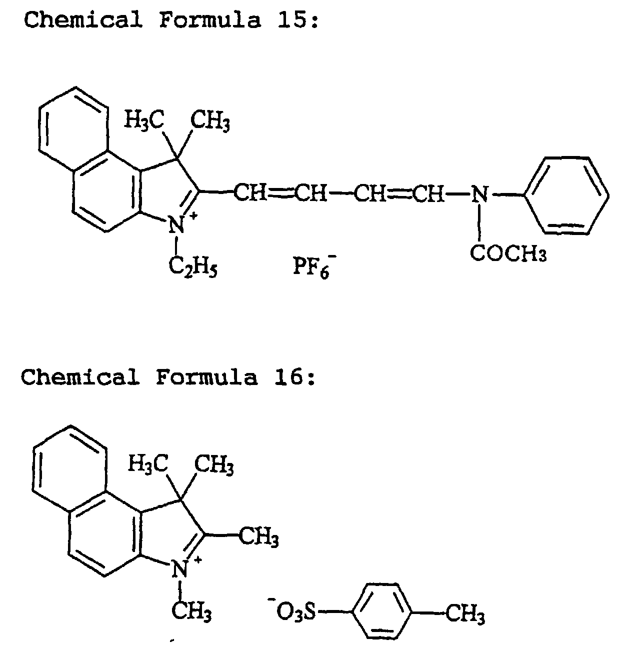

A portion of the crystal was placed in a container and measured for its melting point, revealing that it had a melting point of 177-179°C.

Although the cyanine dyes of the present invention slightly differ in their production conditions and yields depending on their structures, all the cyanine dyes including those represented by Chemical Formulae 1 to 12 can be prepared either by the method in Example 1 or 2, or in accordance therewith.

### Example 3

### Light characteristics of cyanine dyes

The cyanine dyes of the present invention as listed in Table 1 were in a usual manner measured for visible absorption spectrum when dissolved in methanol solution or formed into layers over glasses. The results are in Table 1. For the cyanine dye represented by Chemical Formula 2 of the present invention, FIG. 1 shows the visible absorption spectra measured in a solution form and in a thin layer form.

**Table 1**

| Cyanine dye | Absorption maximum (nm) | |
|---|---|---|
| | Solution | Thin layer |
| Chemical Formula 2 | 677 | 721 |
| Chemical Formula 7 | 678 | 722 |
| Chemical Formula 9 | 673 | 712 |
| Chemical Formula 10 | 678 | 718 |
| Chemical Formula 11 | 678 | 718 |
| Chemical Formula 12 | 678 | 719 |

As shown in Table 1, the cyanine dyes tested had absorption maxima at wavelengths of 670-680 nm when in a solution form, and absorption maxima at wavelengths of 710-730 nm when in a thin layer form. Particularly, as shown in FIG. 1, when formed in a thin layer form, the absorption end in a longer wavelength region of the cyanine dyes of the present invention extended to a wavelength of over 800 nm, and the fact indicates that the cyanine dyes of the present invention substantially absorb laser beams with wavelengths of around 780 nm in a longer wavelength region of their absorption maxima.

### Example 4

### Solubility of cyanine dyes

During three hours mixing, any one of the cyanine dyes of the present invention as listed in Table 2 was intermittently added to three milliliters of TFP kept at 20°C in order to consistently coexist undissolved cyanine dye in the solvent. Thereafter, the resulting solution was filtered to remove undissolved cyanine dye while keeping at the same temperature, followed by determining the saturation concentration in one milliliter of TFP by conventional calorimetric analysis. In parallel, as a control, conventional related compounds represented by Chemical Formulae 17 to 20 were similarly measured for saturation concentration. The results are in Table 2.

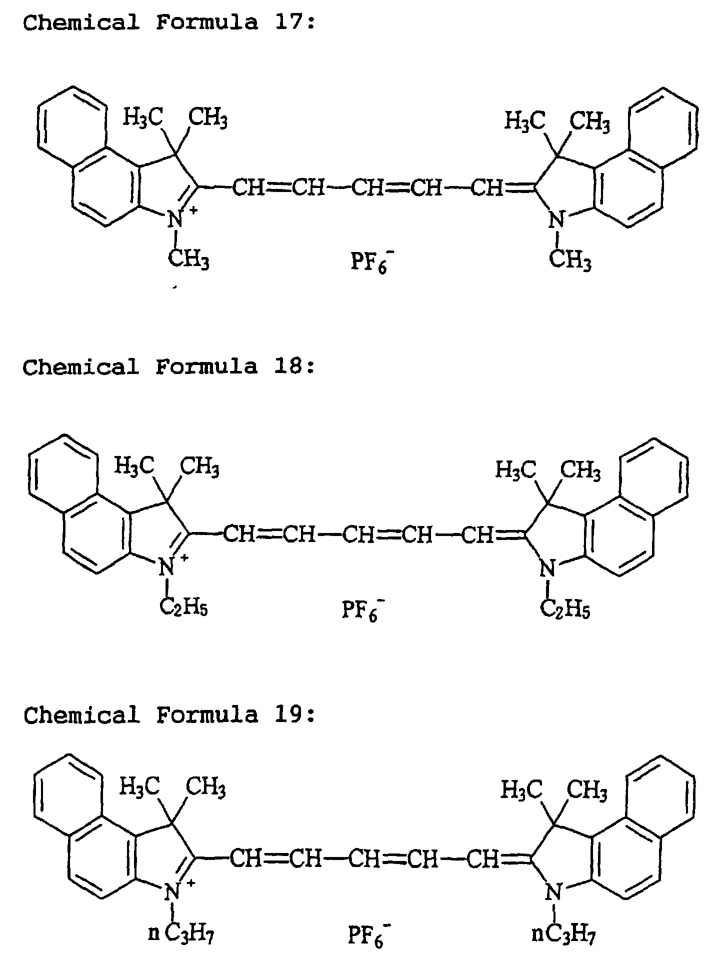

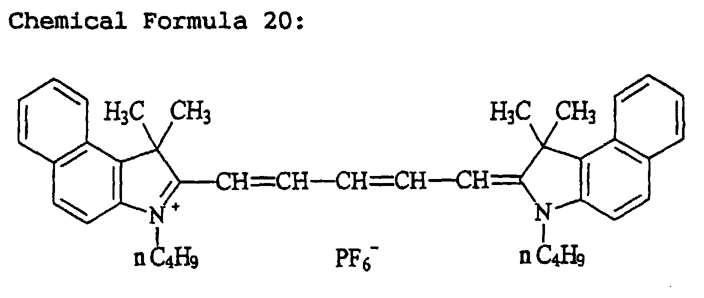

**Table 2**

| Cyanine dye | Saturation concentration (mg/ml) | Remarks |
|---|---|---|
| Chemical Formula 2 | 65.7 | Present invention |
| Chemical Formula 6 | 84.1 | Present invention |
| Chemical Formula 7 | 63.8 | Present invention |
| Chemical Formula 9 | 36.9 | Present invention |
| Chemical Formula 10 | 47.3 | Present invention |
| Chemical Formula 11 | 49.8 | Present invention |
| Chemical Formula 12 | 47.4 | Present invention |
| Chemical Formula 17 | 11.7 | Control |
| Chemical Formula 18 | 11.1 | Control |
| Chemical Formula 19 | 11.5 | Control |
| Chemical Formula 20 | 10.7 | Control |

As evident from Table 2, the pentamethine cyanine dyes as controls had a solubility or saturation concentration of less than 12 mg/ml, while the tested cyanine dyes of the present invention had a solubility which was significantly higher than those of controls. Among the tested cyanine dyes of the present invention, even the cyanine dye represented by Chemical Formula 9, which showed a lowest solubility, had a solubility reaching to 36.9 mg/ml, 3-times higher than those of controls. TFP is a representative organic solvent commonly used for preparing optical recording media. The cyanine dyes of the present invention had a relatively-high solubility in TFP, showed an absorption maximum in visible region at a wavelength of around 720 nm, and had an absorption end in a longer wavelength region extending to a wavelength of over 800 nm, and these facts indicate that the cyanine dyes of the present invention can be advantageously used as light absorbers for composing recording layers of optical recording media such as CD-Rs.

### Example 5

### Optical recording medium

The cyanine dye of the present invention represented by Chemical Formula 9 or 10, as a light absorber, was added to TFP to give a concentration of 2% (w/w), and the mixture was mixed with, as a light resistant improver, a conventional nitroso compound represented by Chemical Formula 21 to give a concentration of 0.4% (w/w), followed by ultrasonically dissolving these compounds. According to conventional manner, the resulting solution was in a rotatory manner allowed to homogeneously coat over one side of a polycarbonate disc substrate, 12 cm in diameter and 1.2 mm in thickness, which concaves for expressing synchronizing signals and addresses for tracks and sectors had been transferred to the track's internal circuit, and dried to form a recording layer, 400 nm in thickness. Thereafter, the substrate was coated with silver by vacuum evaporation to form a reflection layer, 100 nm in thickness, which was closely attached to the above recording layer, and then the reflection layer was homogeneously coated in a rotatory manner with "DAICURE CLEAR SD1700", as a known ultraviolet ray hardening resin commercialized by Dainippon Ink and Chemicals, Inc., Tokyo, Japan, and irradiated to form a protection layer to be closely attached on the surface of the reflection layer. Thus, two types of optical recording media were prepared.

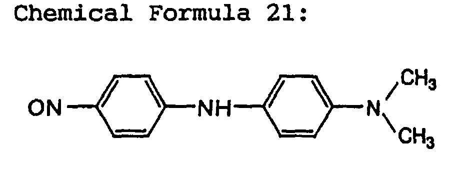

Using an optical pickup having an oscillation wavelength of 780 nm and a writing power of 10 mW, 3T and 11T signals (T=4.3218 MHz) were respectively recorded in a usual manner in the optical recording media of the present invention at a linear velocity of 4.8 m/sec (4 x writing speed), and the resulting optical recording media were tested for reflection factor, modulation factor, 3T jitter, and symmetry, i.e., a difference of synchronization between 3T and 11T signals in an average reading output. The results are in Table 3.

**Table 3**

| Cyanine dye | Reflection factor (%) | Modulation factor (%) | | 3T Jitter (nanosecond) | | Symmetry (%) |
|---|---|---|---|---|---|---|
| | | 11T | 3T | Pit-formed part | Pit-less part | |
| Chemical Formula 9 | 66 | 84 | 42 | 16 | 25 | -4 |
| Chemical Formula 10 | 67 | 85 | 45 | 26 | 32 | -4 |

As evident from Table 3, the optical recording media in this example fulfilled the standards required of CD-Rs in all the items tested. The optical recording media have a recording capacity of over 600 megabytes (MB) and can record large amounts of information of documents, images and voices, as well as other digital information at a relatively-high density by using an optical pickup with an oscillation wavelength of around 780 nm emitted by laser devices. Electron microscopic observation of the recorded surface of the optical recording media observed no crystal of cyanine dye and found regularly-formed high-density minute pits having a size of about one micrometer.

### POSSIBILITY OF INDUSTRIAL APPLICABILITY

As described above, the present invention was made based on both the creation of novel indolenine pentamethine cyanine dyes and the finding of their industrially useful characteristics. Since the cyanine dyes of the present invention have absorption maxima in visible region, they have a variety of uses, for example, in the fields of optical recording media, optical polymerization, solar batteries, dyes, etc., which require organic compounds that absorb visible light. In particular, the cyanine dyes of the present invention, which substantially absorb laser beams with wavelengths of around 780 nm when in a thin layer form, can be advantageously used in light absorbents which compose optical recording layers for optical recording media such as CD-Rs.

In addition, since most of the cyanine dyes of the present invention have a relatively-high solubility in organic solvents such as TFP, they can improve the working efficiency of sequential dissolution of light absorbents in organic solvents and coating of the solutions over substrates when used in preparing optical recording media, and facilitate the production of high-end, high-quality optical recording media in a relatively-high yield. Furthermore, unlike conventional related compounds having perchloric acid ion as a counter ion, the cyanine dyes of the present invention, which have a fluorine-containing anion such as hexafluoro phosphoric acid ion as a counter ion, can be easily handled and do not substantially damage the reflection layer of optical recording media even if silver is used in the reflection layer.

The cyanine dyes having such advantageous features can be prepared in a desired yield through a step of reacting compounds, having a 3,3-dimethyl-2-(1,3-butadienyl)-3H-benzoindolenium skeleton, with compounds having a 2,3,3-trimethyl-3H-benzoindolenium skeleton.

The present invention having these outstanding effects and functions is a significant invention that will greatly contribute to this art.

## Claims

1. A cyanine dye represented by Formula 1: 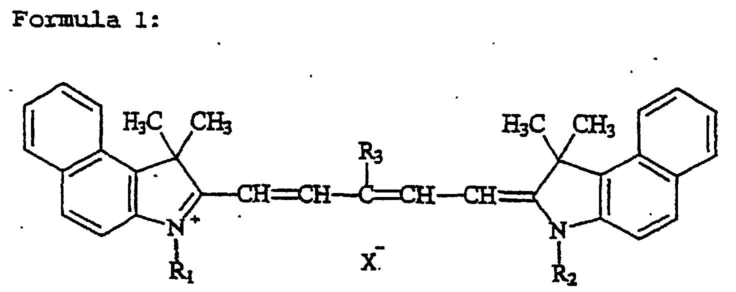 where in Formula 1, R₁ denotes a methyl or ethyl group; R₂ differs from R₁ and denotes a straight- or branched-chain alkyl group; R₃ is hydrogen atom or a substituent selected from the group consisting of halogens and lower-alkyl groups; X⁻ denotes a group comprising fluorine and/or metallic element of the VA group (group 15) in the periodic table.

2. The cyanine dye of claim 1, wherein said X⁻ is a hexafluoro phosphoric acid ion or a hexafluoro antimonic acid ion.

3. The cyanine dye of claim 1 or 2, which substantially absorbs a visible light at a wavelength of around 780 nm.

4. The cyanine dye of claim 1, 2 or 3, which has a solubility of over 12 mg/ml at 20°C in 2,2,3,3-tetrafluoro-1-propanol.

5. A light absorbent comprising any one of the cyanine dyes of claims 1 to 4.

6. The light absorbent of claim 5, which is sensitive to a laser beam with a wavelength of around 780 nm when in a thin layer form.

7. An optical recording medium comprising any one of the cyanine dyes of claims 1 to 4.

8. The optical recording medium of claim 7, which comprises any one of the cyanine dyes of claims 1 to 4 and an appropriate light resistant improver.

9. The optical recording medium of claim 7 or 8, which is capable of using a laser beam with a wavelength of around 780 nm as a writing light.

10. A process for producing any one of the cyanine dyes of claims 1 to 4, which comprises a step of reacting a compound represented by Formula 2, having R₁ and R₃ as defined in Formula 1, with a compound represented by Formula 3 having R₂ as defined in Formula 1: 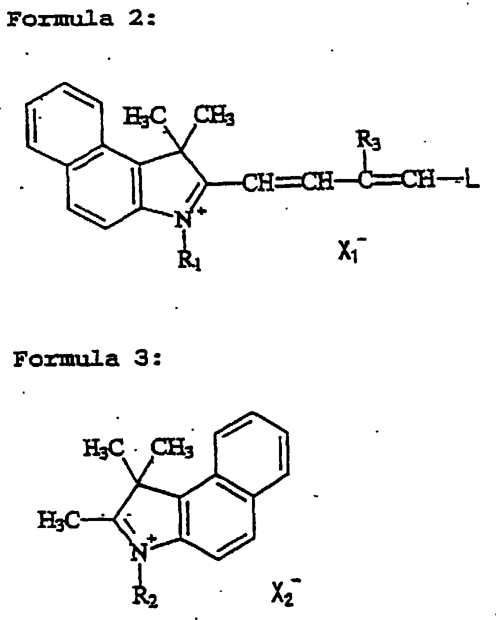 where in Formulae 2 and 3, X₁⁻ and X₂⁻ denote appropriate counter ions, and L denotes an appropriate leaving group.

11. The process for producing any one of the cyanine dyes of claims 1 to 4, which comprises a step of reacting a compound represented by Formula 4, having R₁ as defined in Formula 1, with a compound represented by Formula 5 having R₂ and R₃ as defined in Formula 1: 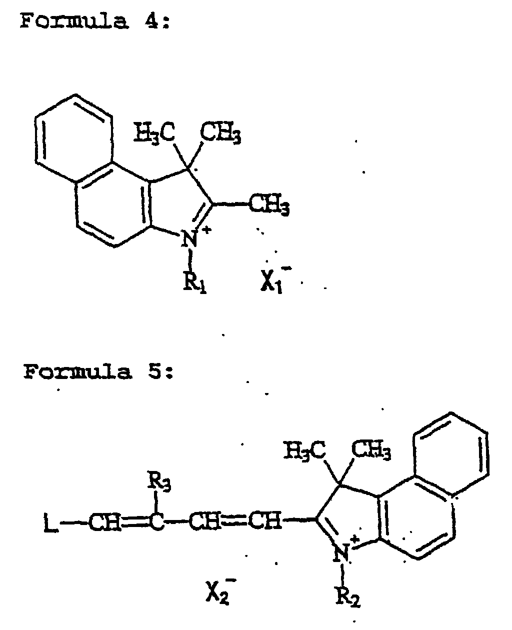 wherein, in Formulae 4 and 5 X₁ and X₂ are as defined in Formulae 2 and 3.
